# FASCICULE DE BREVET EUROPEEN

(11) **EP 3 860 355 B1**
(45) Date de publication et mention de la délivrance du brevet: **27.03.2024**
(21) Numéro de dépôt: 19778522.3
(22) Date de dépôt: 30.09.2019
(51) Int. Cl.: A23C 11/10, A23L 29/206, A23L 29/212, A23L 29/231, A23L 29/238, A23L 29/244, A23L 29/25, A23L 29/256

(54) **PROCÉDÉ DE PRÉPARATION D'UN PRODUIT DE FERMENTATION DE LAITS VÉGÉTAUX**
VERFAHREN ZUR HERSTELLUNG EINES PFLANZLICHEN MILCHFERMENTATIONSPRODUKTS
PROCESS FOR PREPARING A VEGETABLE MILK FERMENTATION PRODUCT

(30) Priorité: 01.10.2018 FR 1859053
(43) Date de publication de la demande: 11.08.2021
(73) Titulaire: Brin de Foli, 63270 Vic-le-Comte (FR)
(72) Inventeur: TROPEL, David, 63270 VIC LE COMTE (FR)
(74) Mandataire: Icosa
(86) Numéro de dépôt international: PCT/EP2019/076391
(87) Numéro de publication internationale: WO 2020/070045

(56) Documents cités:
- EP-A2- 2 604 127
- Anonymous: "Vegan Yogurt Starter Kit", , 14 octobre 2016 (2016-10-14), XP055569982, Extrait de l'Internet: URL:http://www.culturesforhealth.com/media /docs/8050_VeganYogurtStarterKit_web.pdf [extrait le 2019-03-15]
- Anonymous: "Homemade Vegan Yogurt Starter Kit | DIY Non-Dairy Yogurt Kit from Cultures for Health - Cultures for Health", , 31 mai 2018 (2018-05-31), XP055569986, Extrait de l'Internet: URL:https://www.culturesforhealth.com/lear n/diy-kits/vegan-yogurt-starter-kit/#14727 36757740-cfbdbd30-ed5a [extrait le 2019-03-15]
- Anonymous: "Homemade Vegan Yogurt Starter Kit | DIY Non-Dairy Yogurt Kit from Cultures for Health - Cultures for Health", , 20 décembre 2017 (2017-12-20), XP055569990, Extrait de l'Internet: URL:http://web.archive.org/web/20171220011 900/https://www.culturesforhealth.com/lear n/diy-kits/vegan-yogurt-starter-kit/ [extrait le 2019-03-15]
- Anonymous: "Yaourts végétaux aux probiotiques - Vegan & Paléo", , 11 mai 2017 (2017-05-11), XP055569998, Extrait de l'Internet: URL:https://cuisine-saine.fr/recette-veget alienne/yaourts-vegetaux-probiotiques/ [extrait le 2019-03-15]
- Danie.H: "Yaourts au lait d'amande - La table d'Hyssope", , 8 juillet 2018 (2018-07-08), XP055569999, Extrait de l'Internet: URL:https://www.latabledhyssope.eu/post/20 18/06/07/Yaourt-au-lait-d-amande [extrait le 2019-03-15]
- MARTENSSON O ET AL: "FORMULATION OF AN OAT-BASED FERMENTED PRODUCT AND ITS COMPARISON WITH YOGHURT", JOURNAL OF THE SCIENCE OF FOOD AND AGRICULTURE, WILEY & SONS, CHICHESTER, GB, vol. 81, 1 janvier 2001 (2001-01-01), pages 1314-1321, XP001097337, ISSN: 0022-5142, DOI: 10.1002/JSFA.947
- Vibrant Plate: "Homemade Coconut Yogurt {Vegan, Dairy-Free} - Vibrant Plate", , 14 mars 2018 (2018-03-14), XP055570002, Extrait de l'Internet: URL:https://www.vibrantplate.com/homemade- coconut-yogurt-dairy-free/ [extrait le 2019-03-15]
- Anonymous: "Adventures in Vegan Yogurt Making: Everything You Need to Know to Get Started and (Hopefully) Have Success - Healthy Girl's Kitchen", , 7 février 2014 (2014-02-07), XP055570007, Extrait de l'Internet: URL:http://healthygirlskitchen.com/2014/02 /adventures-is-vegan-yogurt-making.html [extrait le 2019-03-15]

## Description

### DOMAINE DE L'INVENTION

La présente invention concerne un procédé pour la préparation domestique de produits de fermentation de jus végétaux, également appelés laits végétaux, en particulier de laits fermentés ou yaourts liquides, brassés ou fermes. L'invention est définie par les revendications annexées.

### ETAT DE LA TECHNIQUE

On connaît l'intérêt des consommateurs pour les produits à base de laits végétaux pour remplacer les laitages, soit du fait d'intolérances alimentaires pour les laitages, lait de vache en particulier, soit pour varier leur alimentation ou encore pour des régimes végétariens ou végétaliens.

Il existe des laits végétaux de toutes origines (soja, quinoa, riz, sésame, amande, noix de coco, avoine, chanvre, noisette, épeautre, sarrasin, multigraine, etc.), préparés par la désintégration des matériaux végétaux (Plant-based milk alternatives an emerging segment of functional beverages: a review. Swati Sethi & al. Food Sci Technol (2016) 53(9):3408-3423). La multiplicité des sources végétales et des procédés de préparation des laits végétaux crée une grande variété de laits végétaux.

Les produits fermentés, disponibles dans le commerce, préparés de manière industrielle à partir de ces sources végétales sont en nombre limité et très standardisés, essentiellement des yaourts de soja, qui ne reflètent pas la variété des laits végétaux disponibles.

L'alternative à cette offre limitée de produits dans le commerce consiste à préparer soi-même les produits fermentés de son choix. Par exemple, le document XP055569998 décrit la préparation d'un produit de fermentation à partir de lait végétal de noix par ajout de ferments et psyllium à température ambiante. Toutefois, si la fabrication domestique de yaourts de lait de vache est aisée et bien connue, notamment par l'usage de yaourtières domestiques qui facilitent les conditions de fermentation des laitages, il n'est pas aisé aujourd'hui de préparer des produits fermentés de laits végétaux, en particulier pour des laits végétaux autres que le lait de soja.

En effet, les produits obtenus en ajoutant des ferments lactiques aux laits végétaux sont hétérogènes, avec une phase solide et une phase liquide translucide, dont le mélange conduit à un produit granulaire sans épaisseur de texture très éloignée de ses équivalents obtenus à partir de laits d'animaux.

Les solutions industrielles passent par plusieurs étapes de procédés physiques, d'ajout de texturants et de phases de chauffage et refroidissement préalables à la fermentation. C'est aussi ce qui est préconisé pour certaines recettes de yaourts végétaux associés à des kits pour un usage domestique en yaourtière qui nécessitent une préparation préalable à la fermentation plus complexe que pour la préparation de yaourts à base de laits de mammifères.

Il existe donc un besoin de disposer de kits de fermentation qui permettent d'obtenir des produits fermentés de laits végétaux de texture similaire à celle des produits obtenus par fermentation de laitages (tel que lait fermenté, yaourt liquide, yaourt brassé et yaourt ferme), pour une préparation domestique simple, notamment dans des yaourtières domestiques pour laquelle il n'est pas nécessaire d'appliquer au préalable un traitement physique (pression, cisaillement, mélange fort...) et/ou thermique pour favoriser la dispersion des texturants lors de leur ajout, il n'y a pas d'effets texturants trop rapides qui peuvent bloquer la fermentation ou entrainer la formation de grumeaux et il n'y a pas de système de mélange durant la fermentation (dans une yaourtière), et donc le risque d'obtenir un produit hétérogène avec une sédimentation des texturants à prise trop lente.

L'invention permet de résoudre ce problème.

### EXPOSE DE L'INVENTION

L'invention concerne un procédé de préparation d'un produit de fermentation de laits végétaux qui comprend les étapes a) d'ajouter des ferments et des agents de texture miscible à l'eau à une température de 10°C à 25°C à une quantité appropriée de lait végétal, puis b) de répartir le mélange obtenu dans des récipients adaptés pour l'étape de fermentation en yaourtière, puis c) de fermentation, l'étape a) de mélange étant réalisée à température ambiante et la quantité totale d'agent de texture étant comprise de 0,1 g à 3 g d'agent de texture pour 100 ml de lait végétal,
les agents de texture comprenant :
- un premier agent de texture, ledit agent de texture étant de la gomme de guar , et
- un deuxième agent de texture choisi parmi les amidons solubles à froid et leurs mélanges en toutes proportions.

### DESCRIPTION DETAILLEE DE L'INVENTION

Les produits de fermentation de laits sont bien connus, en particulier des laits fermentés ou des yaourts liquides, brassés ou fermes. Un kit qui permet à tout un chacun de préparer en une seule étape et sans autre ingrédients des produits de fermentation de laits végétaux de consistance similaire à celle obtenue pour les produits de fermentation de laits de mammifères est décrit ici et non revendiqué.

Le kit décrit fonctionne avec l'ensemble des laits végétaux, et est plus particulièrement adapté pour les laits de quinoa, riz, sésame, amande, noix de coco, noix de cajou, avoine, chanvre, noisette, millet, châtaigne, épeautre, sarrasin, noix du brésil, pois chiches, et leurs mélanges.

Les ferments sont bien connus de l'homme du métier, s'agissant de ferments classiquement employés pour la fermentation de laitages. On citera en particulier les microorganismes des genres *Lactobacillus, Bifidobacterium, Lactococcus, Leuconostoc, Pediococcus, Propionibacterium* et *Streptococcus.*

Plus précisément les espèces qui sont identifiées et connues comme pouvant être utilisée pour la fabrication de produits laitiers fermentés sont *Lactobacillus acidophilus, Lactobacillus amylolyticus, Lactobacillus amylovorus, Lactobacillus animalis(d), Lactobacillus alimentarius, Lactobacillus aviaries, Lactobacillus brevis, Lactobacillus buchneri, Lactobacillus casei(e), Lactobacillus cellobiosus, Lactobacillus collinoides, Lactobacillus coryniformis, Lactobacillus crispatus, Lactobacillus curvatus, Lactobacillus delbrueckii, Lactobacillus diolivorans(f), Lactobacillus farciminis, Lactobacillus fermentum, Lactobacillus gallinarum, Lactobacillus gasseri, Lactobacillus helveticus, Lactobacillus hilgardii, Lactobacillus johnsonii, Lactobacillus kefiranofaciens, Lactobacillus kefiri, Lactobacillus mucosae, Lactobacillus panis, Lactobacillus paracasei, Lactobacillus paraplantarum, Lactobacillus pentosus, Lactobacillus plantarum, Lactobacillus pontis, Lactobacillus reuteri, Lactobacillus rhamnosus, Lactobacillus sakei, Lactobacillus salivarius, Lactobacillus sanfranciscensis, Bifidobacterium adolescentis, Bifidobacterium animalis, Bifidobacterium bifidum, Bifidobacterium breve, Bifidobacterium longum, Lactococcus lactis, Leuconostoc citreum, Leuconostoc lactis, Leuconostoc mesenteroides, Leuconostoc, pseudomesenteroides, Pediococcus acidilactici, Pediococcus dextrinicus, Pediococcus parvulus(f), Pediococcus pentosaceus, Propionibacterium acidipropionici, Propionibacterium freudenreichii* et *Streptococcus thermophilus.*

On citera plus particulièrement les espèces *Streptoccus thermophylus* et *Lactobacilus delbrueckii bulgarii,* employées pour la fabrication de yaourts de laits de mammifères.

Les ferments sont constitués par les microorganismes précités seuls ou en mélanges.

Sont compris comme ferments selon l'invention des mélanges complexes de ferments connus pour la fabrication traditionnelle de laitages de mammifères fermentés connus en particulier sous les noms de laban, leben, labneh, kéfir, koumiss, rayeb, dadiah, dahi, filmjölk, buttermilk, lait ribot, lassi ou viili.

Ces ferments sont conditionnés sous forme de poudres, selon leur mode usuel de conditionnement.

Les ferments peuvent être certifiés « bio » ou encore adaptés pour la réalisation d'aliments « végétaliens ». Il s'agit de ferments produits sur une base végétale. On citera en particulier les ferments commercialisés sous les marques Danisco^{®} VEGE Culture (Dupont) ou NU-TRISH^{®} (Chr Hansen).

Les texturants, également appelés agents de textures, miscibles à l'eau de 10°C à 30°C sont également connus de l'homme du métier. Par miscible à l'eau, on entend qu'ils sont solubles ou se réhydratent dans l'eau de manière à former une solution ou un gel dans l'eau à température ambiante.

La sélection de ces agents de texture permet justement un usage domestique des kits décrits avec le mélange à température ambiante des agents de textures avec le lait végétal, sans avoir à chauffer la préparation.

La température ambiante est celle que l'on trouve dans une pièce de vie d'un logement, qui dépendra de sa latitude et de la saison. Elle est généralement de 17°C à 25°C. La mention de la température ambiante fait référence au fait qu'il n'est pas nécessaire de chauffer le lait végétal pour le mélanger à l'agent de texture avant l'étape de fermentation en yaourtière domestique.

Les agents de texture selon l'invention sont miscibles à l'eau à une température inférieure à 25°C.

Ces agents de textures sont connus de l'homme du métier, en particulier choisis parmi les gommes solubles à froid : gomme konjac, gomme guar, gomme xanthane, gomme karaya, gomme adragante, gomme arabique (ou d'acacia) et la gomme tara ; les alginates ; les pectines et les amidons solubles à froid: c'est le cas notamment des amidons modifiés et/ou des amidons prégélatinisés ; les protéines végétales solubles à froid : protéines de pois, protéines de pomme de terre, protéines de riz, protéines de graine de courge, protéine de férolle, etc.

L'intérêt de l'invention est de pouvoir obtenir des produits de fermentation de laits végétaux de consistance et d'apparence similaires à celles des produits de fermentation de laits de mammifères, tout en utilisant le minimum d'agents texturants pour leur fabrication. A cet effet, on emploiera au moins une gomme soluble à froid, ladite gomme étant la gomme de guar, et un amidor soluble à froid, de préférence modifié ou prégélatinisé comme agent de texture.

L'homme du métier saura déterminer les quantités et proportions relatives de chaque agent de texture en fonction du lait végétal employé et de la consistance recherchée pour le produit de fermentation.

L'agent de texture comprend de la gomme de guar, de l'amidor soluble à froid (en particulier modifié ou prégélatinisé) et leurs mélanges en toutes proportions pour une utilisation sur laits végétaux à base de fruits à coque. D'autres agents de textures peuvent aussi être employés comme la gomme de Konjac.

Le Tableau 1 ci-dessous montre des combinaisons permettant d'obtenir différentes textures de produits fermentés dont les laits fermentés, les yaourts à boire et les yaourts brassés à partir d'un lait d'amande.

**Tableau 1**

| Boisson | Gomme | Concentration (g texturant / 100 ml de laits) | pHi | pHf | Phases après fermentation | Homogénéité après mélange | Type de produit obtenu |
|---|---|---|---|---|---|---|---|
| | Guar | 0.10% | | 5.13 | 2 | Hétérogène | |
| Amande | Guar | 0.25% | 8.62 | 4.81 | 2 | Homogène | Lait fermenté |
| Guar | 0.50% | | 4.48 | 1 | Homogène | Yaourt à boire | |
| Guar | 1% | | 4.46 | 1 | Homogène | Yaourt brassé / yaourt ferme | |
| Konjac | 1% | 8.42 | 4 | 1 | Homogène | Yaourt brassé / yaourt ferme | |
| Amidon C*HIFORM | 2% | 8.75 | 4.36 | 1 | Homogène | Yaourt à boire | |

On emploie un mélange gomme de guar/amidon dans des quantités qui sont ajustés en fonction de la texture recherchée.

Le Tableau 2 ci-dessous fait une synthèse de texturants, ou de leurs combinaisons, et des taux de texturants utilisés qui ont été validées expérimentalement pour l'obtention de textures correspondants à trois différents types de produits fermentés à partir de laits végétaux, à base de fruits à coque, et après une fermentation en yaourtière avec 2g/l de ferments. Les pourcentages sont indiqués en gramme de texturant par rapport à 100 ml de laits végétaux (%).

**Tableau 2**

| **Type de produit obtenu** | **1^{er} texturant** | **2^{nd} texturant** |
|---|---|---|
| Lait fermenté | Guar 0.25% - 0.38% | |
| | Konjac 0.1% | |
| | Amidon 1%-1.5% | |
| Yaourt à boire | Guar 0.5% | |
| | Guar 0.2%-0,5% | Amidon 0.5%-2% |
| | Guar 0.38%-0.5% | Konjac 0.1% |
| | Guar 0.25%-0.5% | Tara 0.5% |
| | Konjac 0.1%-0.25%+ | Amidon 1.5% |
| | Tara 0.25%-0.38%+ | Amidon 1.5% |
| | Amidon 2% | |
| Yaourt brassé | Guar 0.5% | Tara 0.5% |
| | Guar 0.5% | Konjac 0.25% |
| | Guar 0.5-0,6% | Amidon 1.5%-2,5% |

Les agents de texture opèrent leur effet sur l'homogénéité et la texture du jus végétal fermenté dès l'ajout de la composition ferment + agent de texture, mais surtout durant le processus de fermentation. Ainsi la texture dans les minutes qui suivent l'ajout de la préparation et la texture qui résulte de la phase de fermentation ne sont pas similaires montrant la synergie des agents de texture et de la fermentation pour obtenir une texture recherchée.

La quantité d'agents de texture sera comprise de 0,1 g à 3 g d'agents de texture pour 100 ml de lait à fermenter, les quantités dépendant d'une part de la consistance recherchée pour le produit de fermentation et de la nature de l'agent de texture ou du mélange d'agents de texture employés.

Pour un produit de fermentation de type lait fermenté, on emploiera de 0,1 à 0,5 g de gomme de guar pour 100 ml de lait végétal, avantageusement de 0,1 à 0,3 g et de 0,1 à 2 g d'amidon (de préférence modifié ou prégélatinisé pour une dissolution à froid), de préférence de 0,1 à 1,5 g. L'homme du métier saura adapter les quantités d'agent de texture pour un mélange desdits agents, notamment pour un mélange gomme de guar et d'amidon.

Pour un produit de fermentation de type yaourt ferme, on emploiera plus de 1,5 g d'agent de texture pour 100 ml de lait végétal. Le rapport pondéral gomme de guar/amidon est généralement de 0,1 à 3.

Il pourra être adapté en fonction de la texture du produit fermenté que l'on cherchera à obtenir.

Pour la texture d'un yaourt à boire, il va généralement de 0,1 à 0,3.

Pour la texture d'un yaourt brassé, il va généralement de 0,2 à 0,3.

Pour la préparation d'un yaourt à boire on emploiera de 0,2 à 0,4% de gomme de guar, notamment de 0,2 à 0,3 % et de 1 à 2,4 % d'amidon, particulièrement de 1,5 à 2% d'amidon.

Pour la préparation d'un yaourt brassé, on emploiera de 0,4 à 0,7 % de gomme de guar, particulièrement de 0,5 à 0,6% de gomme de guar et de 1,5 à 2,8 % d'amidon, particulièrement de 2 à 2,4% d'amidon. Les pourcentages sont donnés en grammes pour 100 mL de lait végétal à fermenter.

Les quantités de ferments employés pour la réalisation de produits de fermentation de laits végétaux sont les mêmes que pour les laits de vache. La quantité de ferments dépend des espèces et des souches utilisées ainsi que des procédés de leur production et préparation.

L'invention concerne un procédé de préparation d'un produit de fermentation de laits végétaux tel que défini à la revendication 1.

Par mélange à température ambiante il est entendu que le mélange se fait sans nécessiter de chauffage entre l'ajout des texturants et l'ajout des ferments.

L'ajout d'autres ingrédients n'est pas nécessaire pour obtenir les textures souhaitées mais peuvent être utilisées par le consommateur pour ajuster à ses gouts.

Pour sa mise en oeuvre, les ferments et les agents de texture adaptés aux produits fermentés souhaités sont incorporés dans la même préparation. Cette préparation peut être ensuite mélangée directement dans le lait végétal ou un prémélange peut être réalisé dans un petit volume de lait végétal avant intégration dans une plus grande quantité de lait végétal. Le mélange peut se réaliser dans un récipient dont la taille est adaptée au volume préparé et à l'aide d'un ustensile tel qu'une cuillère ou d'un fouet pour disperser la poudre dans le lait végétal.

De manière avantageuse, les ferments et les agents de texture sont ajoutés simultanément.

Le principe de ce mélange est qu'il se réalise à température ambiante sans besoin de chauffage ni d'ajout séquentiel entre les additifs et les ferments. Le temps de mélange peut varier entre quelques secondes à plusieurs minutes en fonction du volume. Il n'y a aucun avantage à mélanger plus de 1 min pour des petits volumes (1 litre de jus).

Après totale dispersion du mélange dans le lait végétal, le mélange peut être réparti entre les différents récipients, pots, bocaux ou bouteilles dans lesquels la fermentation en portion individuelle aura lieu dans la yaourtière domestique. Ces contenants sont alors placés dans les conditions de fermentation adaptées aux ferments utilisés et pour une durée adaptée au produit fermenté désiré. Il est entendu que le consommateur pourra employer tout contenant et tout appareil approprié pour une fermentation domestique, sans nécessairement employer une yaourtière commerciale.

La température de fermentation est généralement de 35°C à 45°C adaptée aux ferments employés. Elle est par exemple de 37°C ou de 42°C pour les espèces *Streptoccus thermophylus* et *Lactobacilus delbrueckii bulgarii,* les plus couramment employées.

La durée de fermentation dépendra de la consistance recherchée pour le produit de fermentation et des ferments employés. Usuellement, une fermentation de laitage en yaourtière dure entre 6 et 12h Pour certaines préparations spécifiques notamment les produits de type lait fermenté ou kefir, il est possible d'avoir un temps de fermentation de 12h-24h à température ambiante.

Afin d'obtenir des produits de type yaourt liquide et brassé, les bocaux ou les bouteilles peuvent être mis dans une yaourtière domestique traditionnelle et le programme yaourt traditionnel peut être lancé. Pour les yaourtières qui permettent une programmation plus fine, les pratiques de fermentation connues de l'homme de l'art peuvent être appliquées. À la fin du procédé de fermentation, les produits fermentés obtenus sont classiquement déposés et maintenus dans un endroit réfrigéré afin de stabiliser le produit. Il en est de même pour les produits obtenus avec notre invention.

Les yaourtières domestiques sont bien connues, disponibles dans le commerce pour la préparation de produits de fermentation de laits de mammifères. Ces produits sont commercialisés par de nombreuses marques d'appareils électroménagers comme les sociétés SEB, PROLINE, CUISINART, LAGRANCE, etc. Elles sont connues depuis longtemps, par exemple décrits dans un brevet US 2 052 253 de 1936. Elles comprennent généralement un ensemble de récipients de fermentation qui vont recevoir le mélange de lait fermenté avec les ferments et les agents de texture dans lesquels se fera la fermentation. Ces récipients individuels sont généralement adaptés pour ensuite conserver le produit de fermentation avant son utilisation. Les yaourtières comprennent également un bac de fermentation dans lequel sont placés les récipients de fermentation pour la durée de l'étape b) de fermentation. Enfin, les yaourtières comprennent des moyens de chauffage et des moyens de commande qui permettent de réguler le chauffage du bac de fermentation pendant la durée de cette étape.

Le procédé selon l'invention est de préférence mis en oeuvre avec le kit de fermentation décrit. .

### EXEMPLES

Les exemples ci-après ont été réalisés avec des ferments traditionnels *streptococcus thermophilus* et *lactobacillus bulgaricus* commercialisés sous la marque ALSA « mon yaourt maison ». Ils ont également été reproduits avec des ferments produits sur une base végétale commercialisés sous les marques Danisco^{®} VEGE Culture (Dupont) ou NU-TRISH^{®} (Chr Hansen). Ils peuvent également être reproduits avec tous autres ferments disponibles, notamment des ferments certifiés « bio » ou encore « végétaliens ». Les quantités de ferments sont données dans les exemples pour des ferments traditionnels commercialisés sous la marque ALSA. Ces quantités pourront être adaptées si l'on emploie d'autres ferments comme les ferments produits sur base végétale.

### Lait Fermenté (hors invention)

La démonstration est réalisée avec 0.12 - 0.48 gramme de gomme de guar ajouté avec 0.25 g de ferment dans 125 ml de lait végétal (comme par exemple à base d'amande, de noix de cajou, des noisettes ou de noix de coco) et avec un cycle de yaourtière de 10h. Un résultat similaire peut également être obtenue avec d'autres gommes (konjac, tara, xanthane) solubles à froid, mais à des pourcentages différents ou grâce à des combinaisons de gommes. Une plus grande concentration d'amidons prégélatinisés ou modifiés peut également être utilisée (environ 1%) seule pour le même type de résultat.

### Yaourt liquide (hors invention)

Pour obtenir un produit de type yaourt liquide, un dosage compris entre 0.25 et 0.87 g de gomme de guar peut être utilisé en combinaison avec 0.25 g de ferment dans 125 ml de lait végétal (comme par exemple à base d'amandes, de noix de cajou, des noisettes ou de noix de coco) et avec un cycle de yaourtière de 10-12h.

Un rendu yaourt liquide peut être obtenu également avec d'autres gommes à des pourcentages différents (selon le fournisseur et la qualité), ou grâce à des combinaisons de gommes, et avec des amidons prégélatinisés ou modifiés (autour de 1-1,5%). Des combinaisons entre gommes et entre gommes et amidons prégélatinisés (ou modifiés) sont aussi possibles. Dans ce cas l'amidon a un rôle d'ajustement de la texture au gout du consommateur.

### Yaourt Brassé

Pour obtenir un produit de type yaourt brassé, des quantités de gomme de guar entre 0.5 et 1.25 g peuvent être utilisés seuls ou en combinaison avec des amidons modifiés ou prégélatinisés, ou des protéines végétales pour ajuster la texture à la marge, et avec 0.25 g de ferment dans 125 ml de lait végétal (comme par exemple à base d'amande, de noix de cajou, des noisettes ou de noix de coco) et avec un cycle de yaourtière de 10-12h.

Un rendu yaourt brassé peut être obtenu également avec d'autres gommes à des pourcentages différents (selon le fournisseur et la qualité) ou grâce à des combinaisons de gommes ou d'autres gommes en combinaison avec de l'amidon modifié ou prégélatinisé.

Les amidons modifiés ou prégélatinisés actuels seuls ne peuvent être utilisés pour obtenir une texture yaourt brassé à moins de monter à des quantités de l'ordre de 6.25 g pour 125 ml de lait qui sont moins intéressantes à mettre en oeuvre que les gommes (autour de 0.6 - 1.25 g%). Dans notre cas des yaourts brassés ont pu être été obtenus avec une combinaison gomme guar/gomme konjac à 0.31 gramme chacun ou gomme guar seule à 0.6 gramme en combinaison avec des amidons modifiés à 1.25 g ou 2.5 grammes et avec 0.25 g de ferment traditionnel dans 125 ml de lait végétal suivi d'un cycle de yaourtière de 10h.

### Yaourt Ferme (hors invention)

Pour l'obtention de produits de type yaourt fermes, les gommes doivent être utilisées à une concentration supérieure à 1.8 g seule ou en combinaison avec des protéines ou des amidons afin d'ajuster à la texture souhaitée. Cette quantité est ajoutée à 0.25 g de ferment traditionnel dans 125 ml de lait végétal suivi d'un cycle de yaourtière de 10-12h.

## Revendications

1. Procédé de préparation d'un produit de fermentation de laits végétaux qui comprend les étapes :
a) d'ajouter à température ambiante des ferments et des agents de texture miscibles à l'eau à une température de 10°C à 25°C à une quantité appropriée de lait végétal, puis
b) de répartir le mélange obtenu dans des récipients adaptés pour l'étape de fermentation en yaourtière, puis
c) de fermentation,
**caractérisé en ce que** les agents de texture comprennent :
- un premier agent de texture, ledit agent de texture étant de la gomme de guar , et
- un deuxième agent de texture choisi parmi les amidons solubles à froid et leurs mélanges en toutes proportions, et
la quantité totale d'agents de texture étant comprise de 0,1 g à 3 g d'agents de texture pour 100 ml de lait végétal.

2. Procédé selon la revendication 1, **caractérisé en ce que** les ferments et agents de texture sont ajoutés de manière simultanée.

3. Procédé selon l'une des revendications 1 ou 2, **caractérisé en ce que** le rapport pondéral gomme de guar/amidons solubles à froid est de 0,1 à 3.

4. Procédé selon l'une des revendications 1 à 3, **caractérisé en ce que** le produit de fermentation est un lait fermenté.

5. Procédé selon la revendication 4, **caractérisé en ce que** les agents de texture comprennent de 0,1 à 0,5 g pour 100 ml de lait végétal de gomme de guar et de 0,1 à 2 g par ml de lait végétal d'amidon soluble à froid.

6. Procédé selon l'une des revendications 1 à 3, **caractérisé en ce que** le produit de fermentation est un yaourt à boire.

7. Procédé selon la revendication 6, **caractérisé en ce que** les agents de texture comprennent de 0,2 à 0,4 g pour 100 ml de lait végétal de gomme de guar et de 1 à 2,4 g par ml de lait végétal d'amidon soluble à froid.

8. Procédé selon l'une des revendications 1 à 3, **caractérisé en ce que** le produit de fermentation est un yaourt brassé.

9. Procédé selon la revendication 8, **caractérisé en ce que** les agents de texture comprennent de 0,4 à 0,7 g pour 100 ml de lait végétal de gomme de guar et de 1,5 à 2,8 g par ml de lait végétal d'amidon soluble à froid.

10. Procédé selon l'une des revendications 1 à 3, **caractérisé en ce que** le produit de fermentation est un yaourt de type ferme et la quantité d'agents de texture est de plus de 1,5 g pour 100 ml de lait végétal.

11. Procédé selon l'une des revendications 1 à 10, **caractérisé en ce que** les ferments sont choisis parmi les microorganismes des genres *Lactobacillus, Bifidobacterium, Lactococcus, Leuconostoc, Pediococcus, Propionibacterium* et *Streptococcus.*

12. Procédé selon l'une des revendications 1 à 11 **caractérisé en ce que** les laits végétaux sont choisis parmi les laits de quinoa, riz, sésame, amande, noix de coco, noix de cajou, avoine, chanvre, noisette, millet, châtaigne, épeautre, sarrasin, noix du brésil, pois chiches, et leurs mélanges.

13. Procédé selon l'une des revendications 1 à 12, **caractérisé en ce que** les ferments et les agents de texture sont conditionnés sous la forme d'un kit de fermentation.

## Patentansprüche

1. Verfahren zur Herstellung eines Pflanzenmilch-Fermentationsprodukts, das die folgenden Schritte umfasst:
a) Zugeben, bei Raumtemperatur, von Fermenten und Texturmitteln, die mit Wasser mit einer Temperatur von 10 °C bis 25 °C mischbar sind, zu einer geeigneten Menge Pflanzenmilch, dann
b) Verteilen der erhaltenen Mischung in Behälter, die für den Fermentationsschritt im Joghurtbereiter geeignet sind, dann
c) Fermentieren,
**dadurch gekennzeichnet, dass** die Texturmittel umfassen:
- ein erstes Texturmittel, wobei das Texturmittel Guarkernmehl ist, und
- ein zweites Texturmittel, ausgewählt aus kaltlöslichen Stärken und deren Gemischen in allen Verhältnissen, und
wobei die Gesamtmenge an Texturmitteln im Bereich von 0,1 g bis 3 g Texturmittel pro 100 ml Pflanzenmilch liegt.

2. Verfahren nach Anspruch 1, **dadurch gekennzeichnet, dass** die Fermente und Texturmittel gleichzeitig zugegeben werden.

3. Verfahren nach einem der Ansprüche 1 oder 2, **dadurch gekennzeichnet, dass** das Gewichtsverhältnis Guarkernmehl/kaltlösliche Stärken 0,1 bis 3 beträgt.

4. Verfahren nach einem der Ansprüche 1 bis 3, **dadurch gekennzeichnet, dass** das Fermentationsprodukt eine fermentierte Milch ist.

5. Verfahren nach Anspruch 4, **dadurch gekennzeichnet, dass** die Texturmittel 0,1 bis 0,5 g Guarkernmehl pro 100 ml Pflanzenmilch und 0,1 bis 2 g kaltlösliche Stärke pro ml Pflanzenmilch umfassen.

6. Verfahren nach einem der Ansprüche 1 bis 3, **dadurch gekennzeichnet, dass** das Fermentationsprodukt ein Trinkjoghurt ist.

7. Verfahren nach Anspruch 6, **dadurch gekennzeichnet, dass** die Texturmittel 0,2 bis 0,4 g Guarkernmehl pro 100 ml Pflanzenmilch und 1 bis 2,4 g kaltlösliche Stärke pro ml Pflanzenmilch umfassen.

8. Verfahren nach einem der Ansprüche 1 bis 3, **dadurch gekennzeichnet, dass** das Fermentationsprodukt ein gerührter Joghurt ist.

9. Verfahren nach Anspruch 8, **dadurch gekennzeichnet, dass** die Texturmittel 0,4 bis 0,7 g Guarkernmehl pro 100 ml Pflanzenmilch und 1,5 bis 2,8 g kaltlösliche Stärke pro ml Pflanzenmilch umfassen.

10. Verfahren nach einem der Ansprüche 1 bis 3, **dadurch gekennzeichnet, dass** das Fermentationsprodukt ein Joghurt vom festen Typ ist und die Menge an Texturmitteln mehr als 1,5 g pro 100 ml Pflanzenmilch beträgt.

11. Verfahren nach einem der Ansprüche 1 bis 10, **dadurch gekennzeichnet, dass** die Fermente ausgewählt sind aus Mikroorganismen der Gattungen *Lactobacillus, Bifidobacterium, Lactococcus, Leuconostoc, Pediococcus, Propionibacterium* und *Streptococcus.*

12. Verfahren nach einem der Ansprüche 1 bis 11, **dadurch gekennzeichnet, dass** die Pflanzenmilche ausgewählt sind aus Quinoa-, Reis-, Sesam-, Mandel-, Kokos-, Cashew-, Hafer-, Hanf-, Haselnuss-, Hirse-, Kastanien-, Dinkel-, Buchweizen-, Paranuss-, Kichererbsenmilch und deren Gemischen.

13. Verfahren nach einem der Ansprüche 1 bis 12, **dadurch gekennzeichnet, dass** die Fermente und Texturmittel in Form eines Fermentationssets verpackt sind.

## Claims

1. Method for preparing a plant milk fermentation product which comprises the steps of:
a) adding at room temperature ferments and texturing agents miscible with water at a temperature of 10°C to 45°C in an appropriate quantity of plant milk, then
b) distributing the mixture obtained into containers suitable for the fermentation stage in a yogurt maker, then
c) fermentation,
**characterized in that** the texturing agents comprise:
- a first texturing agent, said texturing agent being guar gum, and
- a second texturing agent chosen from cold-soluble starches and their mixtures in all proportions, and
the total amount of texturing agents being comprised between 0.1 g and 3 g of texturing agents per 100 ml of plant milk.

2. Method according to claim 1, **characterized in that** the ferments and the texturing agents are added simultaneously.

3. Method according to any of claims 1 or 2, **characterized in that** the weight ratio guar gum/ cold-soluble starches is from 0.1 to 3.

4. Method according to any of claims 1 to 3, **characterized in that** the fermentation product is a fermented milk.

5. Method according to claim 4, **characterized in that** the texturing agents comprise from 0.1 to 0.5 g of guar gum per100 ml of plant milk and from 0.1 to 2 g of cold-soluble starches per 100 ml of plant milk.

6. Method according to any of claims 1 to 3, **characterized in that** the fermentation product is a drinkable yoghurt.

7. Method according to claim 6, **characterized in that** the texturing agents comprise from 0.2 to 0.4 g of guar gum per100 ml of plant milk and from 1 to 2.4 g of cold-soluble starches per 100 ml of plant milk.

8. Method according to any of claims 1 to 3, **characterized in that** the fermentation product is a stirred yoghurt.

9. Method according to claim 8, **characterized in that** the texturing agents comprise from 0.4 to 0.7 g of guar gum per100 ml of plant milk and from 1.5 to 2.8 g of cold-soluble starches per 100 ml of plant milk.

10. Method according to any of claims 1 to 3, **characterized in that** the fermentation product is a firm type yoghurt and the amount of texturing agents is more than 1.5 g per 100 ml of plant milk.

11. Method according to any of claims 1 to 10, **characterized in that** the ferments are chosen from microorganisms of the genera *Lactobacillus, Bifidobacterium, Lactococcus, Leuconostoc, Pediococcus, Propionibacterium* and *Streptococcus.*

12. Method according to any of claims 1 to 11, **characterized in that** the plant milks are chosen from milks of quinoa, rice, sesame, almond, coconut, cashew, oat, hemp, hazelnut, millet, chestnut, spelt, buckwheat, Brazil nut, chickpeas, and mixtures thereof.

13. Method according to any of claims 1 to 12, **characterized in that** the ferments and the texturing agents are packaged in the form of a fermentation kit.
